# EUROPÄISCHE PATENTSCHRIFT

(11) **EP 0 885 784 B1**
(45) Veröffentlichungstag und Bekanntmachung des Hinweises auf die Patenterteilung: **08.10.2003**
(21) Anmeldenummer: 98110598.4
(22) Anmeldetag: 08.06.1998
(51) Int. Cl.: B60R 21/20

(54) **Schutzvorrichtung gegen einen Seitenaufprall in einem Kraftfahrzeug**
Protection device against side impact for vehicle
Dispositif de protection contre un choc latéral pour véhicule automobile

(30) Priorität: 13.06.1997 DE 19725122
(43) Veröffentlichungstag der Anmeldung: 23.12.1998
(73) Patentinhaber: BREED AUTOMOTIVE TECHNOLOGY, INC., Lakeland, FL 33807-3050 (US)
(72) Erfinder: Specht, Martin, 82340 Feldafing (DE); Meyer, Rudolf, 85235 Odelzhausen (DE)
(74) Vertreter: Nöth, Heinz, Dipl.-Phys.

(56) Entgegenhaltungen:
- DE-A- 4 304 152

## Beschreibung

Die Erfindung betrifft eine Schutzvorrichtung gegen einen Seitenaufprall in einem Kraftfahrzeug mit einem im Ruhezustand in einer Verkleidung einer Fahrzeugtür angeordneten Gaskissen, das sich im aufgeblasenen Zustand seitlich im Fahrzeug über die Fensterunterkante erstreckt.

Eine derartige Schutzvorrichtung ist aus der DE 43 04 152 A1 bekannt. Zur Abstützung des aufgeblasenen über die Fensterunterkante ragenden Gaskissens ist bei der bekannten Schutzvorrichtung ein oberer Airbag, der an der Fensteroberkante befestigt ist, vorgesehen. Durch die gegenseitige Berührung der beiden Airbags bzw. Gaskissen wird eine begrenzt querfeste Verbindung hergestellt. Eine derartige querfeste Verbindung läßt sich nur in geschlossenen Kraftfahrzeugen erreichen. Bei einem Cabrio ist es nicht möglich, an der Fensteroberkante einen oberen Airbag zur Abstützung des unteren Airbags vorzusehen.

Aufgabe der Erfindung ist es daher, eine Schutzvorrichtung der eingangs genannten Art zu schaffen, bei welcher ohne großen Aufwand eine Abstützung des aufgeblasenen über die Fensterunterkante bzw. Türbrüstung ragenden Gaskissens erreicht wird.

Diese Aufgabe wird erfindungsgemäß dadurch gelöst, daß das Gaskissen durch wenigstens zwei aufblasbare und sich beim Aufblasen über die Fensterunterkante hinaus erstreckende Stützen an der Fahrzeugtür abgestützt ist. Das Gaskissen erstreckt sich im aufgeblasenen Zustand seitlich im Fahrzeug und ragt über die Türbrüstung (Fensterunterkante) und kann sich in bevorzugter Weise im wesentlichen über das gesamte Seitenfenster erstrecken. Die wenigstens zwei Stützen können im aufgeblasenen Zustand etwa säulenförmig ausgebildet sein. Die wenigstens zwei Stützen umfassen Druckräume, welche eine Stützfunktion auf das beim Aufblasen der beiden Stützen entfaltete Gaskissen für dessen Befüllung mit einem Füllgas und ferner während einer bestimmten Standzeit (z.B. mindestens sechs Sekunden), während der das Gaskissen eine Schutzfunktion gegen einen Seitenaufprall, insbesondere im Türbrüstungsbereich, ausübt. Bei einem Cabrio beträgt diese Standzeit ca. acht Sekunden. Die Standzeit ist insbesondere so bemessen, daß auch bei einem Zweitaufprall ein Schutz durch das Gaskissen gewährleistet ist.

In vorteilhafter Weise sind die wenigstens zwei Stützen innerhalb des Gaskissens angeordnet. Auf diese Weise erreicht man einen selbstützenden Airbag, welcher als Seitenaufprallschutz insbesondere gegen einen Kopfaufprall auf die Fensterunterkante bzw. Türbrüstung wirkt.

Die jeweiligen Stützen sind im Ruhezustand insbesondere in einem aufgerollten oder gefalteten Zustand innerhalb der Verkleidung der Fahrzeugtür angeordnet. Auch das Gaskissen kann in aufgerolltem oder gefaltetem Zustand in der Verkleidung angeordnet sein. Zur Erzielung der Stützfunktion durch das Aufblasen und das gleichzeitige Entfalten des Gaskissens sind nur geringe Massen zu bewegen, weshalb die gewünschte Stützfunktion und Schutzfunktion kurzzeitig im geforderten Millisekundenbereich erreicht wird.

In bevorzugter Weise sind die jeweiligen Stützen schlauchförmig ausgebildet, die im Ruhezustand im kollabierten und aufgerollten Zustand innerhalb der Verkleidung untergebracht sind. Die Schlauchenden sind druckdicht verschlossen. Die Stützen werden bevorzugt aus einem gasdichten Material gebildet. Hierzu eignet sich insbesondere ein gasdicht beschichtetes Gewebe wie es beispielsweise bei Feuerschläuchen zum Einsatz kommt. Ein derartiges Material kann einen Innendruck von ca. 60 x 10⁵ Pa ( 60 bar) standhalten. In den Stützen wird daher zur Erzeugung der Stützwirkung ein erheblich höherer Druck gebildet als im Gaskisseninnern, in welchem ein Druck von ca. 0,3 x 10⁵ Pa (0,3 bar) gebildet wird. Zur Druckerzeugung in den Stützen kann ein Gasgenerator verwendet werden. In bevorzugter Weise ist in jeder Stütze wenigstens ein Gasgenerator zur Erzeugung des stützenden Druckraumes vorgesehen. Jede Stütze bildet auf diese Weise ein geschlossenes Drucksystem. Zum Füllen des Gaskissens (Airbags) kann ein separater Gasgenerator oder können mehrere separate Gasgeneratoren vorgesehen sein. In bevorzugter Weise können diese Gasgeneratoren an oberen Enden in separaten Kammern der säulenartigen Stützen angeordnet sein.

Anhand der Figuren wird die Erfindung noch näher erläutert.

Es zeigt
- Fig. 1: ein Ausführungsbeispiel im Ruhezustand;
- Fig. 2: verschiedene Gaskissenformen mit eingebauten Stützen;
- Fig. 3: ein Ausführungsbeispiel der Schutzvorrichtung in aufgeblasenem Zustand;
- Fig. 4: eine Ausführungsform eines Befestigungsmittels für die Befestigung einer Stütze an einer Fahrzeugtür im Ruhezustand und im aufgeblasenen Zustand;
- Fig. 5: eine Anordnung des Ausführungsbeispiels an einer Fahrzeugtür;
- Fig. 6: eine Anordnung eines Gasgenerators zum Befüllen des Gaskissens;
- Fig. 7: ein weiteres Ausführungsbeispiel der Erfindung;
- Fig. 8: eine Ausführungsform für die druckdichte Zuführung eines zweipoligen Zündkabels zur Zündeinrichtung eines im Stützeninnern angeordneten Gasgenerators; und
- Fig. 9: ein Ausführungsbeispiel, bei welchem das Gaskissen über Abblasventile in den Stützen gefüllt wird.

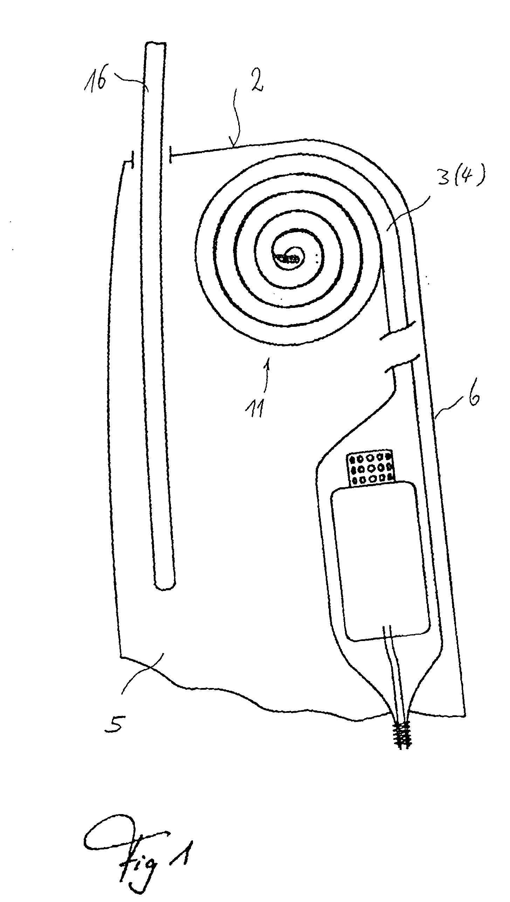

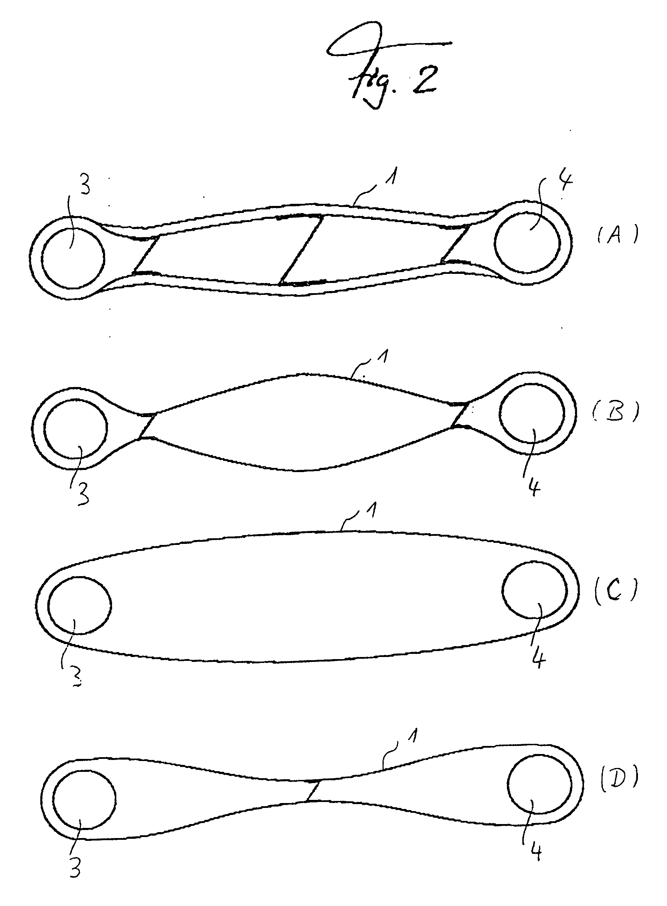

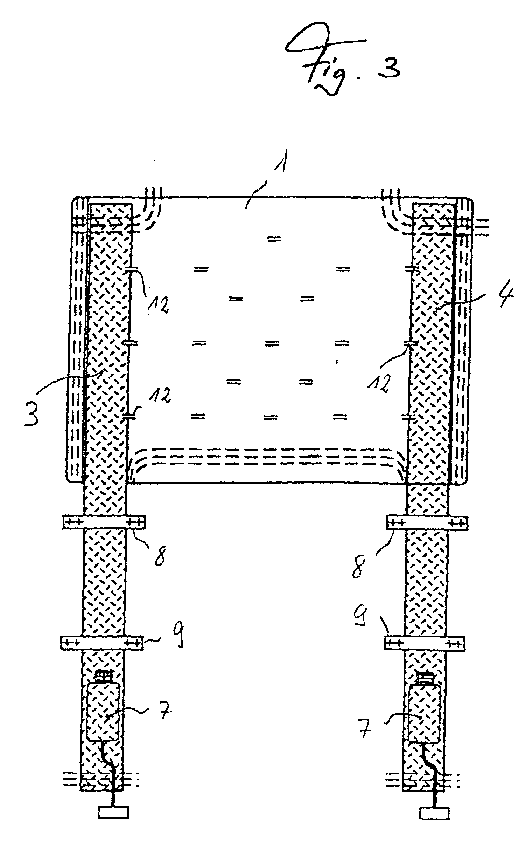

Die in den Figuren gezeigte Schutzvorrichtung besitzt zwei Stützen 3 und 4, welche im aufgeblasenen Zustand (Fig. 3) eine Säulenform aufweisen. Im Ruhezustand sind die Stützen 3, 4 zu einer Rolle 11 (Fig. 1) aufgerollt und innerhalb einer Verkleidung 6 einer Fahrzeugtür 5 untergebracht. Zum Aufblasen der säulenförmigen Stützen 3 und 4 dienen zugeordnete Gasgeneratoren 7. Die Gasgeneratoren sind im Inneren der Stützen 3 und 4 angeordnet. Beim dargestellten Ausführungsbeispiel werden die Stützen 3 und 4 von einem gasdichten Material insbesondere einem gasdicht beschichteten Gewebe gebildet. Ein derartiges Gewebe wird beispielsweise in herkömmlicher Weise bei Feuerwehrschläuchen verwendet. Im aufgerollten Zustand ist der jeweilige Schlauch 3 bzw. 4, welcher die Stütze bildet, kollabiert und in kompakter Weise zu der in der Fig. 1 dargestellten Rolle aufgerollt. Die Rolle 11 liegt, wie die Fig. 1 zeigt, außen. Beim Aufrollen besteht daher nicht die Gefahr, daß die sich entfaltende Rolle in das Fahrzeuginnere ragt. Verletzungen des Fahrzeuginsassen während des Aufblasvorganges werden dadurch vermieden. Um die aufgerollten Stützen 3 und 4 aus dem aufgerollten Zustand in den aufgeblasenen Zustand (Fig. 3) zu bringen, werden die Gasgeneratoren 7 gezündet. In den aufgeblasenen Stützen 3 und 4 entsteht dabei ein hoher Druck, der bis zu 30 x 10⁵ Pa (30 bar) betragen kann. Wie insbesondere aus den Fig. 2 und 3 zu ersehen ist, sind die Stützen 3 und 4 an beiden Enden innerhalb eines Gaskissens 1 (Airbag) angeordnet. Auch das Gaskissen 1 kann im Ruhestand in aufgerollter Form, wie die beiden Stützen 3, 4, innerhalb der Verkleidung der Fahrzeugtür 5 untergebracht sein. Beim dargestellten Ausführungsbeispiel sind zwei Stützen vorgesehen. Es können, falls erforderlich, auch mehr Stützen vorgesehen sein. Die Stützen 3, 4 und/oder das Gaskissen 1 können im Ruhezustand auch z.B. in Ziehharmonikaform gefaltet sein.

Durch die säulenförmigen Stützen, welche im aufgeblasenen Zustand von den Schläuchen gebildet werden, wird eine mechanische Stützeinrichtung für das Gaskissen 1 im entfalteten Zustand und beim Entfalten gewährleistet. Ferner bilden die Stützen 3 und 4 ein stützendes Gerüst im gefüllten Zustand des Gaskissens 1. Im Gaskissen 1 ist ein bedeutend geringerer Fülldruck, ca. 0,3 x 10⁵ Pa (0,3 bar) vorhanden. Um diesen Fülldruck herzustellen, können die Hochdruckräume im Innern der schlauchförmigen Stützen 3, 4 als Kraftspeicher zum Befüllen und Nachfüllen des Gaskissens 1 während der geforderten Standzeit, welche bei einem Cabrio mindestens 6, vorzugsweise 8 Sekunden beträgt, dienen. In den beiden Stützen 3, 4 können in das Gaskisseninnere gerichtete Einblaslöcher 12 z.B. an der jeweils nach innen gerichteten Schlauchlegekante mit definierter Ventilwirkung vorgesehen sein. Hierdurch wird erreicht, daß durch das durchlässige Gewebe des Gaskissens austretendes Füllgas aus den den hohen Innendruck aufweisenden Gasspeichern der Stützen 3 und 4 nachgefüllt wird.

Hierzu können die Gasgeneratoren 7 in zeitlicher Aufeinanderfolge Gas erzeugen. Es können auch mehrere nacheinander gezündete Gasgeneratoren zum Befüllen der Stützen 3 und 4 sowie des Gaskissens 1 vorgesehen sein. In bevorzugter Weise bilden die jeweiligen Stützen 3 und 4 abgeschlossene Drucksysteme. Hierzu sind die schlauchförmigen Stützen an ihren oberen und unteren Enden gasdicht, beispielsweise durch Vulkanisieren oder Vernähen verschlossen. Das Gaskissen 1 erstreckt sich über die Türbrüstung 2 (Fensterunterkante) zwischen Fahrzeuginnenraum und einer Fensterscheibe 16 und bildet einen Seitenaufprallschutz insbesondere im Kopfbereich. Es ist auch möglich, daß das Gaskissen sich nach unten zwischen die Fahrzeugtür und die Sitzposition des Fahrzeuginsassen erstreckt. Die Stützen weisen einen Durchmesser von 50 bis 80mm auf.

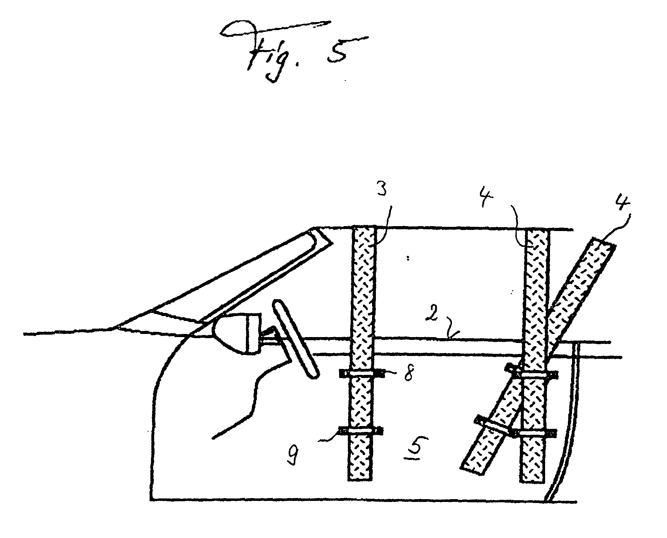

In der Fig. 2 sind in den Darstellungen (A bis D) verschiedene Formen des Gaskissens mit an den Gaskissenenden eingesetzten Stützen 3 dargestellt. In der Fig. 3 erstrecken sich die Stützen 3, 4 senkrecht als Stützsäulen nach oben. Es ist jedoch auch möglich, eine oder mehrere Stützen schräg nach oben verlaufend im aufgeblasenen Zustand anzuordnen wie es in Fig. 5 dargestellt ist.

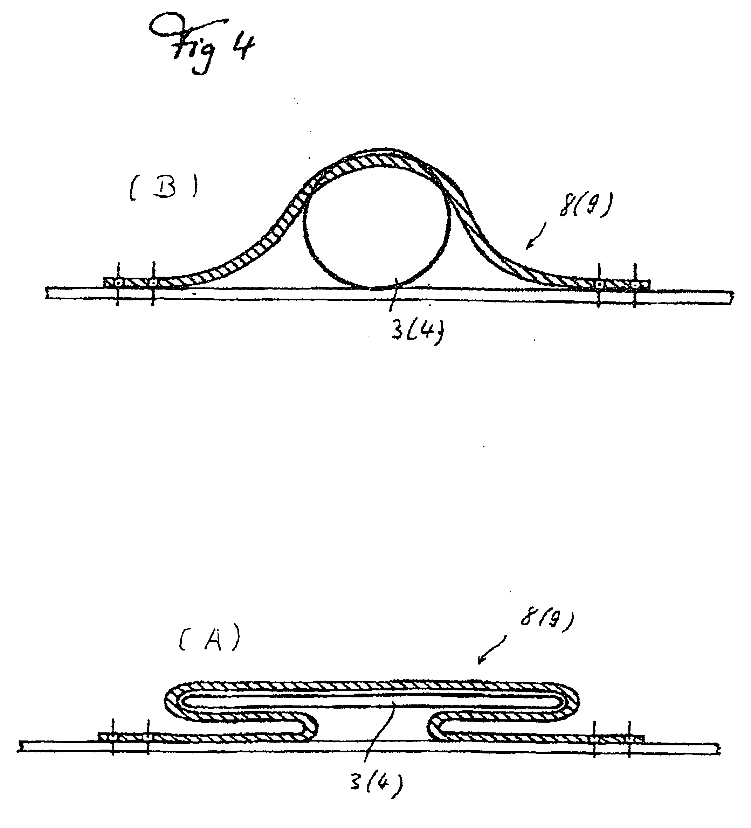

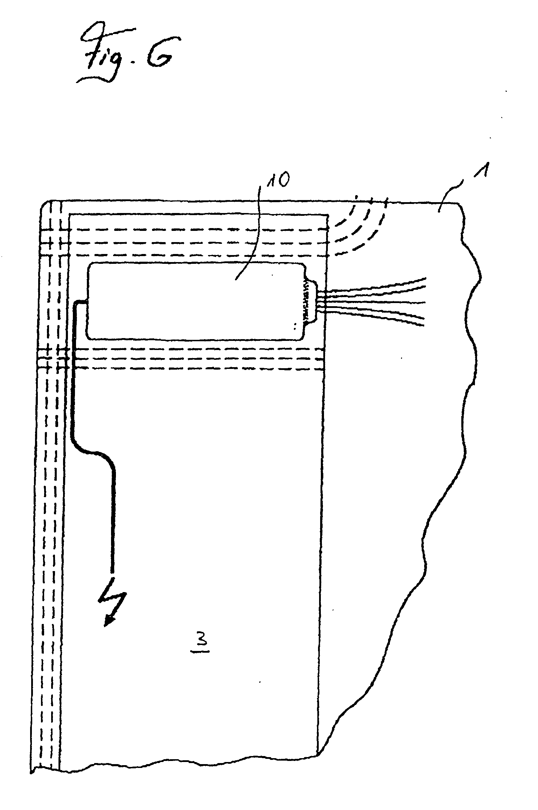

Bei dem in der Fig. 6 dargestellten Ausführungsbeispiel ist in einem separaten Teil der säulenförmigen Stütze 3 ein separater Gasgenerator 10 zum Befüllen des Gaskissens 1 gezeigt. Auch in der anderen Stütze 4 kann ein derartiger Gasgenerator, der zum Befüllen des Gaskissens 1 dient, vorgesehen sein. Bei diesem Ausführungsbeispiel bilden die Innenräume der säulenförmigen Stützen 3, 4 im aufgeblasenen Zustand druckdicht abgeschlossene Druckräume mit erheblich höherem Innendruck (annähernd das Hundertfache) als der Fülldruck im Gaskissen 1. Sowohl bei der Ausführungsform der Fig. 2 als auch der Ausführungsform der Fig. 5 bilden die Stützen 3, 4 ein starres Gerüst für das dazwischen aufgespannte Gaskissen 1. Auch bei zerstörter Fensterscheibe wird ein Nachaußenziehen des Gaskissens 1 verhindert. Die beiden Stützen 3, 4 wirken wie starre Säulen. Zur Verankerung der Stützen 3 und 4 sind Befestigungsstellen 8 und 9, an denen die Stützen in ihrem unteren Bereich, d.h. in dem entlang der Fahrzeugtür 5 verlaufenden Bereich, an der Fahrzeugtür 5 befestigt sind. Wie aus der Fig. 4 zu ersehen ist, werden die Befestigungsstellen 8 und 9 bevorzugt durch Schellen gebildet. Diese Schellen können aus einem mit der Fahrzeugtür fest verbundenen Bandmaterial bestehen, welches im Ruhezustand gefaltet ist wie es in der Darstellung (A) in Fig. 4 gezeigt ist. Das bandförmige Material der Schellen ist um die jeweilige Stütze gelegt. Beim Aufblasen der Stützen 3 und 4 wird das Bandmaterial der Schellen aufgeweitet, wie es in der Darstellung (B) der Fig. 4 gezeigt ist. Die an verschiedenen Stellen insbesondere zwei Befestigungsstellen 8 und 9 vorgesehenen bandförmigen Schellen bilden eine einwandfreie Abstützung der aus den Schläuchen gebildeten Stützen 3 und 4 im aufgeblasenen Zustand an der Fahrzeugtür 5 (Fig. 2 und 5).

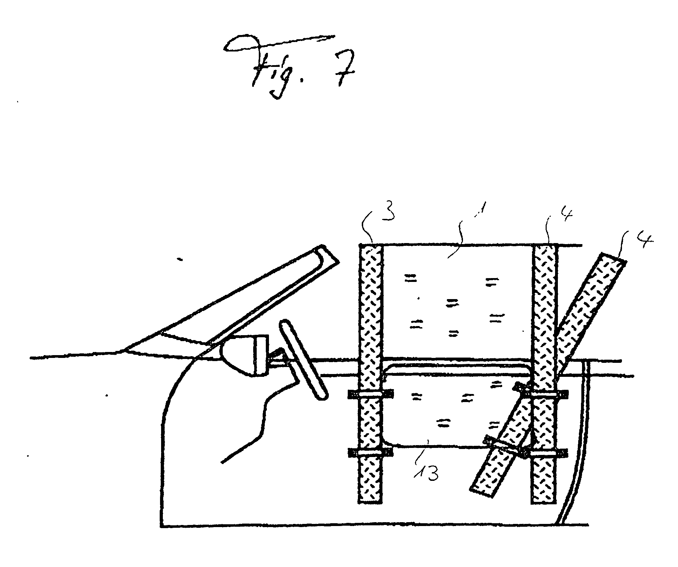

Wie in der Fig. 7 gezeigt ist, kann im Toraxbereich, insbesondere entlang der Fahrzeugtür, ein weiteres Gaskissen 13 vorgesehen sein. Dieses Gaskissen 13 kann ein separates Gaskissen sein oder ein an das Gaskissen 1 angeschlossenes Gaskissen sein. Die Befüllung des Gaskissens 1 und/oder des Gaskissens 13 sowie der Stützen 3 und 4 kann über Gaszuleitungen erfolgen. Die Gaserzeugung kann von einem zentralen Gasgenerator bzw. von separaten dem Gaskissen 1 bzw. 13 und den Stützen 3 und 4 zugeordneten Gasgeneratoren erfolgen. Bei einem an das Gaskissen 1 angeformten zusätzlichen Gaskissen 13 (Toraxkissen) kann sich dieses von dem zwischen den Stützen 3 und 4 aufgespannten Gaskissen 1 beim Befüllen nach unten entfalten.

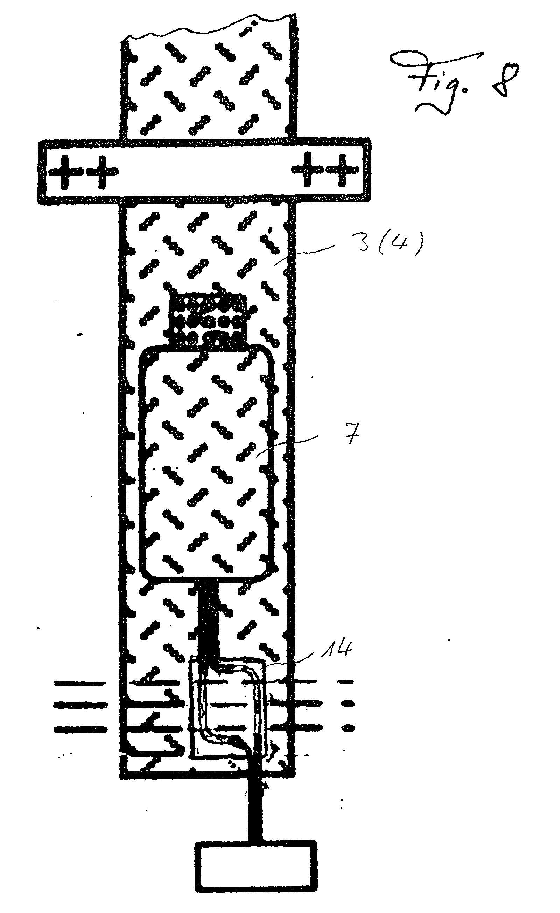

Wie in der Fig. 8 gezeigt ist, kann in dem Zündkabel, welches als zweipoliges Zündkabel ausgebildet sein kann, eine Nähzone 14 integriert sein. Hierbei wird ein druckdichtes Abnähen der Stütze 3 bzw. 4, welche als Hochdruckschlauch ausgebildet sein kann, ermöglicht. Diese Nähzone 14 kann sich in einem zwei- oder dreifachen Nähbereich am unteren Ende der jeweiligen Stütze 3 bzw. 4 befinden.

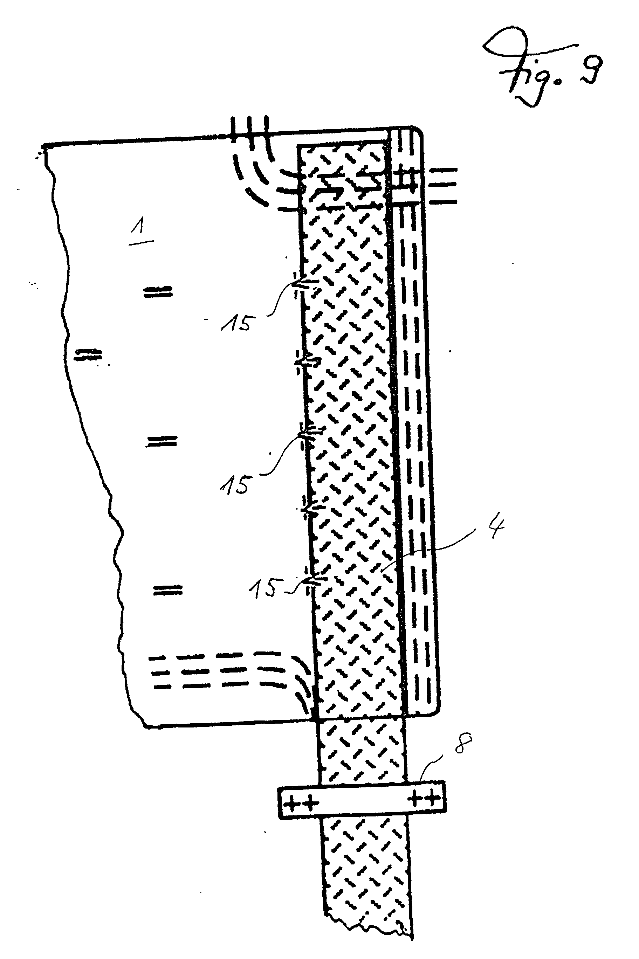

Bei dem in der Fig. 9 dargestellten Ausführungsbeispiel befinden sich in der Schlauchlegekante Abblasventile 15, welche bei einem definierten Überdruck z.B. 30 x 10⁵ Pa (30 bar) Füllgas aus dem jeweiligen Innenraum der Stütze 3 bzw. 4 in das Gaskissen 1 einblasen. Es wird somit zunächst die von den Stützen 3 und 4 erforderliche Stützwirkung in den Druckräumen an den beiden Enden der Stützen 3 und 4 hergestellt, wobei das Gaskissen 1 zwischen den beiden Stützen aufgespannt ist und gegebenenfalls das an das Gaskissen 1 angeformte zusätzliche Gaskissen 13 (Toraxgaskissen) für die Entfaltung nach unten in den Türbereich in Bereitschaft gehalten ist. Sobald der definierte Überdruck in den Innenräumen der Stützen 3, 4 hergestellt ist, erfolgt über die Abblasventile 15 die Befüllung des Gaskissens 1 und gegebenenfalls des angeformten Toraxgaskissens 13.

In den dargestellten Ausführungsbeispielen ist die Schutzvorrichtung in Verbindung mit den vorderen Türen eines Kraftfahrzeuges, insbesondere eines Cabrios, beschrieben. Die Schutzvorrichtung kann auch an den beiden Hintertüren eines Kraftfahrzeuges oder eines Cabrios als Seitenaufprallschutz angeordnet sein.

## Patentansprüche

1. Schutzvorrichtung gegen einen Seitenaufprall in einem Kraftfahrzeug mit einem im Ruhezustand in einer Verkleidung einer Fahrzeugtür angeordneten Gaskissen, das sich im aufgeblasenen Zustand seitlich im Fahrzeug und über die Tür- bzw. brüstung bzw. Fensterunterkante erstreckt,
**dadurch gekennzeichnet,**
**daß** das Gaskissen (1) durch wenigstens zwei aufblasbare und sich beim Aufblasen über die Türbrüstung hinaus erstreckende Stützen (3,4) an der Fahrzeugtür (5) abstützbar ist.

2. Schutzvorrichtung nach Anspruch 1, **dadurch gekennzeichnet, daß** die wenigstens zwei Stützen (3,4) im aufgeblasenen Zustand etwa säulenförmig ausgebildet sind.

3. Schutzvorrichtung nach Anspruch 1 oder 2, **dadurch gekennzeichnet, daß** jede der wenigstens zwei Stützen (3,4) von einem im Ruhezustand kollabierten Schlauch gebildet ist.

4. Schutzvorrichtung nach einem der Ansprüche 1 bis 3, **dadurch gekennzeichnet, daß** die jeweilige Stütze (3,4) im Ruhezustand innerhalb der Verkleidung (6) in aufgerolltem oder gefaltetem Zustand angeordnet ist.

5. Schutzvorrichtung nach einem der Ansprüche 1 bis 4, **dadurch gekennzeichnet, daß** die jeweilige Stütze (3,4) durch einen oder mehrere Gasgeneratoren (7), welcher bzw. welche sensorabhängig aktivierbar ist bzw. sind, aufblasbar ist.

6. Schutzvorrichtung nach einem der Ansprüche 1 bis 5, **dadurch gekennzeichnet, daß** die Gaszufuhr in den jeweiligen Stützeninnenraum mittels einer Gaszuführung erfolgt.

7. Schutzvorrichtung nach Anspruch 6, **dadurch gekennzeichnet, daß** wenigstens ein Gasgenerator (7) im Innenraum der jeweiligen Stütze (3,4) angeordnet ist.

8. Schutzvorrichtung nach einem der Ansprüche 1 bis 7, **dadurch gekennzeichnet, daß** die jeweilige Stütze (3,4) in dem Bereich, in welchem sie sich entlang der Fahrzeugtür (5) erstreckt, in Befestigungsstellen (8,9) an der Fahrzeugtür (5) abgestützt ist.

9. Schutzvorrichtung nach Anspruch 8, **dadurch gekennzeichnet, daß** die Befestigungsstellen (8,9) von beim Aufblasen der Stützen (3,4) aufweitbaren an der Fahrzeugtür (5) befestigten Schellen gebildet sind.

10. Schutzvorrichtung nach einem der Ansprüche 1 bis 9, **dadurch gekennzeichnet, daß** die jeweilige Stütze (3,4) aus gasdichtem Material gebildet ist.

11. Schutzvorrichtung nach einem der Ansprüche 1 bis 10, **dadurch gekennzeichnet, daß** die wenigstens zwei Stützen (3,4) im Innern des Gaskissens (1) angeordnet sind.

12. Schutzvorrichtung nach einem der Ansprüche 1 bis 11, **dadurch gekennzeichnet, daß** das Gaskissen (1) beim Aufblasen der wenigstens zwei Stützen (3,4) für eine Befüllung mit Füllgas entfaltbar ist.

13. Schutzvorrichtung nach einem der Ansprüche 1 bis 12, **dadurch gekennzeichnet, daß** das Gaskissen (1) im Ruhezustand aufgerollt oder gefaltet ist.

14. Schutzvorrichtung nach einem der Ansprüche 1 bis 13, **dadurch gekennzeichnet, daß** in den Stützen (3,4) ein wesentlich höherer Fülldruck herrscht als im Gaskissen (1).

15. Schutzvorrichtung nach einem der Ansprüche 1 bis 14, **dadurch gekennzeichnet, daß** zur Befüllung des Gaskissens (1) wenigstens ein separater Gasgenerator (10) vorgesehen ist.

16. Schutzvorrichtung nach Anspruch 15, **dadurch gekennzeichnet, daß** die Befüllung des Gaskissens (1) über die Stützen (3,4) erfolgt.

17. Schutzvorrichtung nach Anspruch 15 oder 16, **dadurch gekennzeichnet, daß** der wenigstens eine separate Gasgenerator (10) in wenigstens einer Stütze (3,4) angeordnet ist.

18. Schutzvorrichtung nach einem der Ansprüche 1 bis 17, **dadurch gekennzeichnet, daß** der in der Stützen (3,4) aufgebaute Gasdruckraum einen Gasspeicher bildet für das Nachfüllen des Gaskissens (1) während seiner Standzeit.

19. Schutzvorrichtung nach einem der Ansprüche 1 bis 18, **dadurch gekennzeichnet, daß** das Material der Stützen (3,4) aus einem gasdicht beschichteten Gewebe gebildet ist.

20. Schutzvorrichtung nach einem der Ansprüche 1 bis 19, **dadurch gekennzeichnet, daß** die Stützen (3,4) im aufgeblasenen Zustand einen Durchmesser von 50 bis 80 mm aufweisen.

21. Schutzvorrichtung nach Anspruch 4, **dadurch gekennzeichnet, daß** eine von der jeweiligen Stütze (3,4) gebildete Rolle (11) vom Fahrzeuginnenraum weggerichtet ist.

22. Schutzvorrichtung nach einem der Ansprüche 1 bis 21, **dadurch gekennzeichnet, daß** die Standzeit für die Abstützung des Gaskissens (1) mindestens sechs Sekunden, insbesondere acht Sekunden beträgt.

23. Schutzvorrichtung nach einem der Ansprüche 1 bis 22, **dadurch gekennzeichnet, daß** zusätzlich zum Gaskissen (1) ein weiteres sich entlang der Tür sich erstrekkendes Gaskissen (13) insbesondere Toraxgaskissen vorgesehen ist.

24. Schutzvorrichtung nach einem der Ansprüche 1 bis 23, **dadurch gekennzeichnet, daß** mit einem oder mehreren Gasgeneratoren mittels Füllgasverteiler die beiden Stützen (3,4) oder das bzw. die Gaskissen (1, 13) gefüllt sind.

25. Schutzvorrichtung nach einem der Ansprüche 1 bis 24, **dadurch gekennzeichnet, daß** für ein Zündkabel eines im Stützeninneren angeordneten Gasgenerators (7) eine druckdicht abnähbare Nähzone (14) vorgesehen ist.

26. Schutzvorrichtung nach einem der Ansprüche 1 bis 25, **dadurch gekennzeichnet, daß** die Befüllung des Gaskissens und/oder zusätzlichen Gaskissens (13) dann erfolgt, wenn im Innern der Stützen (3, 4) ein bestimmter Gasdruck aufgebaut ist.

27. Schutzvorrichtung nach Anspruch 26, **dadurch gekennzeichnet, daß** in den Stützen (3,4) Abblasventile (15), welche in das Gaskisseninnere gerichtet sind, vorgesehen sind.

## Claims

1. Protection device against a side impact in a motor vehicle comprising a gas bag which in its resting position is arranged in a trim of a vehicle door and which in its inflated state extends sideways in the vehicle and over the door frame or the lower window border, **characterised in that** the gas bag (1) can be supported at the vehicle door (5) by at least two supports (3, 4) which can be inflated and which, during inflation, extend over the door frame.

2. Protection device according to claim 1, **characterised in that** the at least two supports (3, 4) are designed to be approximately column-shaped in their inflated state.

3. Protection device according to claim 1 or 2, **characterised in that** each of the at least two supports (3, 4) is created by a tube which is collapsed in the resting position.

4. Protection device according to one of claims 1 to 3, **characterised in that** each respective support (3, 4), in its resting position, is arranged within the trim (6) in a rolled up or folded state.

5. Protection device according to one of claims 1 to 4, **characterised in that** each respective support (3, 4) can be inflated by one or several gas generators (7), which can be activated in relation to a sensor.

6. Protection device according to one of claims 1 to 5, **characterised in that** the gas supply into each respective support interior is carried out by means of a gas supplier.

7. Protection device according to claim 6, **characterised in that** at least one gas generator (7) is arranged in the interior of each respective support (3, 4).

8. Protection device according to one of claims 1 to 7, **characterised in that** each respective support (3, 4) is supported at fastening points (8, 9) on the vehicle door (5) in the region in which it extends along the vehicle door (5).

9. Protection device according to claim 8, **characterised in that** the fastening points (8, 9) are created by clamps, which can be widened by the inflation of the supports (3, 4) and are fastened to the vehicle door (5).

10. Protection device according to one of claims 1 to 9, **characterised in that** each respective support (3, 4) is made from gastight material.

11. Protection device according to one of claims 1 to 10, **characterised in that** the at least two supports (3, 4) are arranged in the interior of the gas bag (1).

12. Protection device according to one of claims 1 to 11, **characterised in that** the gas bag (1) can be unfolded during the inflation of the at least two supports (3, 4) to be inflated with inflation gas.

13. Protection device according to one of claims 1 to 12, **characterised in that** the gas bag (1) is rolled up or folded in its resting position.

14. Protection device according to one of claims 1 to 13, **characterised in that** a significantly higher inflation pressure is present in the supports (3, 4) than in the gas bag (1).

15. Protection device according to one of claims 1 to 14, **characterised in that** at least one separate gas generator (10) is foreseen for the inflation of the gas bag (1).

16. Protection device according to claim 15, **characterised in that** the inflation of the gas bag (1) is carried out by means of the supports (3, 4).

17. Protection device according to claim 15 or 16, **characterised in that** the at least one separate gas generator (10) is arranged in at least one support (3, 4).

18. Protection device according to one of claims 1 to 17, **characterised in that** the gas pressure chamber established in the supports (3, 4) creates a gas storage for reinflation of the gas bag (1) during its service life.

19. Protection device according to one of claims 1 to 18, **characterised in that** the material of the supports (3, 4) is made out of a fabric coated with a gas-tight layer.

20. Protection device according to one of claims 1 to 19, **characterised in that** the supports (3, 4), in their inflated state, display a diameter of 50 to 80 mm.

21. Protection device according to claim 4, **characterised in that** a reel (11) created by one of the respective supports (3, 4) is directed away from the motor vehicle interior.

22. Protection device according to one of claims 1 to 21, **characterised in that** the time for supporting the gas bag (1) comprises at least six seconds, in particular eight seconds.

23. Protection device according to one of claims 1 to 22, **characterised in that** in addition to the gas bag (1) a further gas bag (13) extending along the door is foreseen, in particular a thorax gas bag.

24. Protection device according to one of claims 1 to 23, **characterised in that** the two supports (3, 4) or the gas bag or gas bags (1, 13) are inflated by one or several gas generators, by means of inflation gas distributors.

25. Protection device according to one of claims 1 to 24, **characterised in that** a sewing zone which can be sewn in a pressure-tight manner (14) is foreseen for an ignition cable of a gas generator (7) arranged in the interior of the support.

26. Protection device according to one of claims 1 to 25, **characterised in that** the inflation of the gas bag and/or additional gas bag (13) is carried out when a predetermined gas pressure is reached within the interior of the supports (3, 4).

27. Protection device according to claim 26, **characterised in that** release valves (15), directed towards the interior of the gas bag, are foreseen in the supports (3, 4).

## Revendications

1. Dispositif de protection contre un impact latéral dans un véhicule automobile, comportant un coussin d'air agencé dans l'état de repos dans la garniture d'une portière, s'étendant dans l'état gonflé latéralement dans le véhicule et au-dessus de l'appui de la portière ou du bord inférieur de la vitre,
**caractérisé en ce que**
le coussin d'air (1) peut être supporté sur la portière du véhicule (5) par au moins deux supports gonflables (3, 4), s'étendant lors du gonflement au-dessus de l'appui de la portière.

2. Dispositif de protection selon la revendication 1, **caractérisé en ce que** les au moins deux supports (3, 4) ont pratiquement une configuration en colonne dans l'état gonflé.

3. Dispositif de protection selon les revendications 1 ou 2, **caractérisé en ce que** chacun des au moins deux supports (3, 4) est constitué par un tuyau affaissé dans l'état de repos.

4. Dispositif de protection selon l'une des revendications 1 à 3, **caractérisé en ce que** le support respectif (3, 4) est agencé dans l'état de repos à l'intérieur de la garniture (6), dans un état enroulé ou plié.

5. Dispositif de protection selon l'une des revendications 1 à 4, **caractérisé en ce que** le support respectif (3, 4) peut être gonflé par un ou plusieurs générateurs de gaz (17), pouvant être actionné(s) par un capteur.

6. Dispositif de protection selon l'une des revendications 1 à 5, **caractérisé en ce que** l'amenée de gaz vers l'espace intérieur du support respectif est assurée par une admission de gaz.

7. Dispositif de protection selon la revendication 6, **caractérisé en ce qu'**au moins un générateur de gaz (7) est agencé dans l'espace intérieur du support respectif (3, 4).

8. Dispositif de protection selon l'une des revendications 1 à 7, **caractérisé en ce que** dans la région dans laquelle il s'étend le long de la portière du véhicule (5), le support respectif (3, 4) est supporté dans des points de fixation (8, 9) sur la portière du véhicule (5).

9. Dispositif de protection selon la revendication 8, **caractérisé en ce que** les points de fixation (8, 9) sont constitués par des brides extensibles lors du gonflement des supports (3, 4) et fixées sur la portière du véhicule (5).

10. Dispositif de protection selon l'une des revendications 1 à 9, **caractérisé en ce que** le support respectif (4, 4) est composé de matériau étanche au gaz.

11. Dispositif de protection selon l'une des revendications 1 à 10, **caractérisé en ce que** les au moins deux supports (3, 4) sont agencés à l'intérieur du coussin d'air (1).

12. Dispositif de protection selon l'une des revendications 1 à 11, **caractérisé en ce que** le coussin d'air (1) peut être déplié en vue d'un remplissage de gaz de remplissage lors du gonflement des au moins deux supports (3, 4).

13. Dispositif de protection selon l'une des revendications 1 à 12, **caractérisé en ce que** le coussin d'air (1) est enroulé ou plié dans l'état de repos.

14. Dispositif de protection selon l'une des revendications 1 à 13, **caractérisé en ce que** la pression de remplissage dans les supports (3, 4) est nettement plus élevée que dans le coussin d'air (1).

15. Dispositif de protection selon l'une des revendications 1 à 14, **caractérisé en ce qu'**au moins un générateur de gaz séparé (10) sert au remplissage du coussin d'air (1).

16. Dispositif de protection selon la revendication 15, **caractérisé en ce que** le remplissage du coussin d'air (1) se fait par l'intermédiaire des supports (3, 4).

17. Dispositif de protection selon les revendications 15 ou 16, **caractérisé en ce que** le au moins un générateur de gaz séparé (10) est agencé dans au moins un support (3, 4).

18. Dispositif de protection selon l'une des revendications 1 à 17, **caractérisé en ce que** l'espace de pression de gaz établi dans les supports (3,4) constitue un accumulateur de gaz servant au remplissage du coussin d'air (1) durant sa durée d'utilisation.

19. Dispositif de protection selon l'une des revendications 1 à 18, **caractérisé en ce que** le matériau des supports (3, 4) est constitué par un tissu à revêtement étanche au gaz.

20. Dispositif de protection selon l'une des revendications 1 à 19, **caractérisé en ce que** les supports (3, 4) ont dans l'état gonflé un diamètre compris entre 50 et 80 mm.

21. Dispositif de protection selon la revendication 4, **caractérisé en ce qu'**un rouleau (11) constitué par un des supports respectifs (3, 4) est orienté à l'écart de l'habitacle.

22. Dispositif de protection selon l'une des revendications 1 à 21, **caractérisé en ce que** la durée d'utilisation de support du coussin d'air (1) correspond au moins à six secondes, en particulier à huit secondes.

23. Dispositif de protection selon l'une des revendications 1 à 22, **caractérisé en ce qu'**il comporte, en plus du coussin d'air (1), un coussin d'air additionnel (13), en particulier un coussin d'air de protection de la région du thorax, s'étendant le long de la portière.

24. Dispositif de protection selon l'une des revendications 1 à 23, **caractérisé en ce que** les deux supports (3, 4) ou le ou les coussins d'air (1, 13) sont remplis par un ou plusieurs générateurs de gaz par l'intermédiaire de répartiteurs du gaz de remplissage.

25. Dispositif de protection selon l'une des revendications 1 à 24, **caractérisé en qu'**une zone de couture à couture étanche à la pression (14) est prévue pour un câble d'allumage d'un générateur de gaz (7) agencé à l'intérieur du support.

26. Dispositif de protection selon l'une des revendications 1 à 25, **caractérisé en ce que** le remplissage du coussin d'air et/ou du coussin d'air additionnel (13) est effectué lors de l'établissement d'une pression de gaz définie à l'intérieur des supports (3, 4).

27. Dispositif de protection selon la revendication 26, **caractérisé en que** des soupapes d'évacuation (15) orientées vers l'intérieur du coussin d'air, sont agencés dans les supports (3, 4).
